# EUROPÄISCHE PATENTSCHRIFT

(11) **EP 0 617 592 B1**
(45) Veröffentlichungstag und Bekanntmachung des Hinweises auf die Patenterteilung: **20.08.1997**
(21) Anmeldenummer: 93908762.3
(22) Anmeldetag: 15.10.1992
(51) Int. Cl.: A61C 7/12, A61K 6/06

(54) **ORTHODONTISCHES HILFSTEIL**
ORTHODONTIC AID
ACCESSOIRE D'ORTHODONTIE

(30) Priorität: 26.10.1991 DE 4135434
(43) Veröffentlichungstag der Anmeldung: 05.10.1994
(73) Patentinhaber: DENTAURUM J.P. WINKELSTROETER KG, D-75228 Ispringen (DE)
(72) Erfinder: SERNETZ, Friedrich, D-7530 Pforzheim (DE)
(74) Vertreter: Hoeger, Stellrecht & Partner
(86) Internationale Anmeldenummer: EP9202382
(87) Internationale Veröffentlichungsnummer: WO9307830

(56) Entgegenhaltungen:
- EP-A- 0 161 831
- US-A- 3 847 865
- US-A- 4 251 576
- US-A- 4 302 532
- US-A- 4 988 293
- US-A- 5 078 596
- Römpps Chemie-Lexikon, 1983, Seiten 2076,2077

## Beschreibung

Die Erfindung betrifft ein auf Kunststoffbasis hergestelltes, orthodontisches Hilfsteil, Bracket oder Bukkalröhrchen, mit einer zumindest in mit Zahnkorrekturkräften beaufschlagten Teilbereichen angeordneten, die mechanische Festigkeit erhöhenden Verstärkung. Ein Hilfsteil gemäß dem Oberbegriff von Anspruch 1 ist aus der EP-A-0 161 831 bekannt.

Bislang sind orthodontische Hilfsteile z.B. Brackets oder Bukkalröhrchen aus Metall, Kunststoff oder Keramik bekannt, die alle ihre unterschiedlichen Vorzüge und Nachteile aufweisen. Hilfsteile aus Kunststoff sind billig und einfach herzustellen, einfach auf den Zahnoberflächen des Patienten zu befestigen und wieder abzunehmen. Nachteilig ist bei diesen Hilfsteilen, daß sie in den Bereichen, in den sie mit Zahnkorrekturkräften beaufschlagt werden, nachgiebig sind und so eine exakte Kontrolle der auszuführenden Zahnbewegung nicht erlauben.

Metallische orthodonische Hilfsteile haben den Nachteil, daß aufgrund des metallischen Glanzes der Teile und ihrer silbernen Farbe die Hilfsteile sehr auffällig sind und dem zu behandelnden Patienten ein sogenanntes "metallisches Lächeln" verleihen.

Keramikteile, insbesondere aus Aluminiumoxid hergestellt, fallen im Mund der Patienten weitaus weniger auf als die metallischen Brackets, haben jedoch den Nachteil, daß sie sehr hart sind und Probleme beim Abnehmen von der Zahnoberfläche nach erfolgter Behandlung bieten.

Um den Problemen bei den auf Kunststoffbasis hergestellten Brackets zumindest teilweise zu begegnen, wurde deshalb bereits vorgeschlagen, diese mit einer Metalleinlage zu versehen, um die Steifigkeit des Brackets und auch dessen mechanische Festigkeit zu verbessern (vgl. US-A-4 302 532). Die metallischen Einsätze bewirken jedoch eine Verminderung der Transparenz des Brackets, so daß es im Mund des Patienten genau so auffällt wie metallische Brackets Außerdem weisen die metallischen Einsätze, wenn sie an der Oberfläche des Hilfsteils blank liegen, ebenso wie die metallischen Brackets selbst einen zu großen Abrieb und eine zu starke Friktion mit den die Korrekturkräfte aufbringenden Bogendrähten auf. Anstelle der Metalleinsätze schlägt die EP-A-0 161 831 Einsätze aus monokristallinem α - Aluminiumoxid vor, bevorzugt jedoch die Herstellung der Brackets insgesamt aus monokristallinem α - Aluminiumoxid.

Aufgabe der Erfindung ist es, die vorstehenden Nachteile bei einem eingangs beschriebenen orthodontischen Hilfsteilen zu vermeiden.

Diese Aufgabe wird erfindungsgemäß bei einem Bracket der eingangs beschriebenen Art dadurch gelöst, daß die Verstärkung unter Verwendung eines keramischen Materials hergestellt ist.

Trotz der extrem großen Unterschiede in der Wärmeausdehnung und im Elastizitätsmodul von üblichen Kunststoffen und keramischen Materialien ergeben sich überraschenderweise keine Probleme an den Materialübergängen. Dies ist insbesondere deshalb unerwartet, da beim Tragen der Hilfsteile durch den Patienten im Mund täglich eine Vielzahl von Heiß-Kalt-Zyklen vorkommen, beispielsweise beim Konsum heißer oder gekühlter Getränke oder dem Verzehr heißer Gerichte bzw. von Eis.

Besonders geeignet ist oxidkeramisches Material. Hierbei sind zwei prinzipielle Lösungen denkbar, nämlich zum einen die Verwendung des keramischen Materials als Füllstoff für den Kunststoff des Kunststoffbrackets in den mechanisch beanspruchten Teilen oder aber die Verwendung als Ausgangsprodukt für die Herstellung eines Einsatzteils für die mechanisch beanspruchten Teile des Brackets.

Die Verwendung der oxidischen anorganischen Massen bei der Herstellung der Verstärkung (im folgenden allgemein Keramik genannt), vermindert den Abrieb und verringert die Friktion des im Slot eines Brackets eingelegten Bogendrahtes. Vorzugsweise bildet die Verstärkung im wesentlichen die Oberflächenbereiche des Hilfsteiles, welche mit den Korrekturkräften beaufschlagt werden.

Die keramische Masse läßt sich transparent oder zumindest opak herstellen, weshalb die ästhetischen Anforderungen, die an die orthodontischen Hilfsteile gestellt werden, besser erfüllt sind. Ein Farbunterschied zu dem Kunststoffmaterial ist normalerweise kaum feststellbar. Gegenüber den Brackets, die vollständig aus Keramik bestehen, ist die Bruchgefahr beim Entfernen der Brackets vom Zahn des Patienten vermieden und ebenso die Problematik der Verklebung der Keramikbrackets mit der Zahnoberfläche, da die erfindungsgemäßen orthodontischen Hilfsteile, wie die bekannten, insgesamt aus Kunststoff bestehenden und unverstärkten Hilfsteile in bekannter Weise geklebt und abgenommen werden können.

Vorzugsweise umfaßt die Verstärkung ein Keramikteil, insbesondere aus gesintertem, polykristallinem Aluminiumoxid. Bei diesem Material läßt sich insbesondere die Transparenz oder Transluzenz des Teils sehr gut an die Transparenz bzw. Transluzenz des umgebenden Kunststoffmaterials anpassen. Das Kunststoffmaterial in seiner Farbe und damit ebenso das Verstärkungsteil wird vorzugsweise an die Zahnfarbe, möglicherweise sogar individuell an die Zahnfarbe des jeweiligen Patienten, angepaßt.

Das Keramikteil der Verstärkung kann im Preßsitz in dem Hilfsteil gehalten sein, wobei dann das Hilfsteil und das Verstärkungsteil getrennt hergestellt und erst in einem weiteren Arbeitsgang zusammengefügt werden.

Ebensogut läßt sich das eigentliche Hilfsteil auf ein vorgefertigtes keramisches Verstärkungsteil aufspritzen. Selbstverständlich kann jedoch auch das Verstärkungsteil mit dem Kunststoff-Hilfsteil verklebt werden.

Alternativ zu einem Keramikteil kann die Verstärkung als ein mit partikelförmigem keramischem Material gefülltes Polymerteil sein. Dieses kann unabhängig von dem orthodontischen Hilfsteil hergestellt sein oder aber einstückig mit diesem ausgebildet sein. Die gesondert hergestellte Verstärkung kann wiederum im Preßsitz in dem orthodontischen Hilfsteil gehalten oder mit diesem verklebt sein. Ebenso kann man auch in diesem Fall das Hilfsteil auf die Verstärkung aufspritzen.

Vorzugsweise wird der Kunststoff, aus dem die orthodontischen Hilfsteile hergestellt sind, einen Polyethylen-, Polyester-, Polycarbonat- oder Polyacrylharz-Anteil oder hiervon abgeleitete Copolymeranteile umfassen.

Das partikelförmige, keramische Material zum Verstärken der Polymerteile wird bevorzugt im wesentlichen ZrO₂ oder Siliziumdioxid umfassen, insbesondere in Form von Quarz- oder Cristobalitmehl, oder aber Aluminiumoxid, insbesondere in seiner Form des Trihydrats.

Aluminiumoxidtrihydrat hat gegenüber Siliziumdioxid den Vorteil, daß aufgrund der geringeren Härte ein Metallabrieb, beispielsweise vom Bogendraht, unterbleibt, d.h. reibende Metallteile auf den Verstärkungsteilen führen nicht zu sogenannten Schreibspuren, die dem Teil ein graues oder mattes und damit auffälliges Aussehen verleihen können.

Die mittlere Partikelgröße des Füllstoffs wird vorzugsweise im Bereich zwischen 5 µm bis 100 µm gewählt werden, da zum einen die Partikel dieser Größe in der für die Fertigung des Verstärkungsteiles vorgesehenen Mischung leicht stabilisiert werden können und zum andern eine ausreichende Oberflächenglattheit des hergestellten Verstärkungsteils sichergestellt ist. Der Anteil des keramischen Materials an der Gesamtmasse kann sehr hoch sein, d.h. 50 - 80 Gew. %.

Als verstärktes orthodontisches Hilfsteil kommt insbesondere ein Bracket in Frage, das mit einer Basis zur direkten Verklebung des Hilfsteils mit einer Zahnoberfläche ausgerüstet ist, wobei die Verstärkung so ausgebildet ist, daß die Festigkeit der Basis im wesentlichen unbeeinflußt ist. Diese Beschränkung der Verstärkungsteile auf die Kräfte aufnehmenden Bereiche des Brackets ist insbesondere im Hinblick auf die spätere Entfernung der Brackets von der Zahnoberfläche wichtig, da sich bei den ansonsten flexiblen Kunststoffbrackets ein allmähliches Ablösen der Bracketbasis von der Klebestelle an der Zahnoberfläche durchführen läßt. Die Kräfte, die zu einem Zeitpunkt auf den Zahn wirken, bleiben dabei so gering, daß es nicht zu Ausrissen von Zahnschmelz an der Zahnoberfläche kommen kann.

Das Entfernen der Brackets von der Zahnoberfläche kann dabei mit einfachen zangenartigen Instrumenten durchgeführt werden, wie dies von den bisherigen Kunststoffbrackets schon bekannt ist.

Die Verstärkung des Brackets wird insbesondere auf den Bereich des für die Aufnahme eines Bogendrahtes vorgesehenen Schlitzes beschränkt, über den die Korrekturkräfte des Bogendrahtes auf das Bracket und letztendlich den Zahn übertragen werden.

Eine weitere alternative Ausführungsform der Erfindung besteht darin, daß das Hilfsteil, insbesondere das Bracket, insgesamt aus einem mit partikelförmigem keramischem Material hochgefüllten Kunststoff hergestellt ist. In diesem Fall gilt, wie auch bei der weiter oben beschriebenen Variante, daß das Herstellungsverfahren sowie auch die Materialauswahl für die hochgefüllten Kunststoffe aus dem Bereich der Sanitärtechnik bekannt ist. Beispielhaft seien die DE-PS 24 49 656 sowie die US-PS 38 47 865 genannt.

Obwohl es sich in der Sanitärtechnik um eine ganz andere Problematik handelt als bei orthodontischen Hilfsteilen, läßt sich das dort beschriebene Material, gegebenenfalls modifiziert, überraschenderweise auch in der Orthodontie mit Vorteil einsetzen. Insbesondere überrascht, daß das Material, das in der Sanitärtechnik nur für großflächige Gegenstände, wie z.B. Badewannen oder auch Küchenarbeitsplatten, bekannt ist, ohne Probleme für die Herstellung sehr kleiner und verhältnismäßig komplexer Strukturen einsetzbar ist.

Diese und weitere Vorteile der Erfindung werden im folgenden anhand der Zeichnung noch näher erläutert. Es zeigen im einzelnen:
- Fig. 1: ein erfindungsgemäßes orthodontisches Hilfsteil in Form eines Brackets mit eingesetzter Verstärkung; und
- Fig. 2: ein erfindungsgemäßes orthodontisches Hilfsteil in Form eines Brackets mit einer einstückig ausgebildeten Verstärkung.

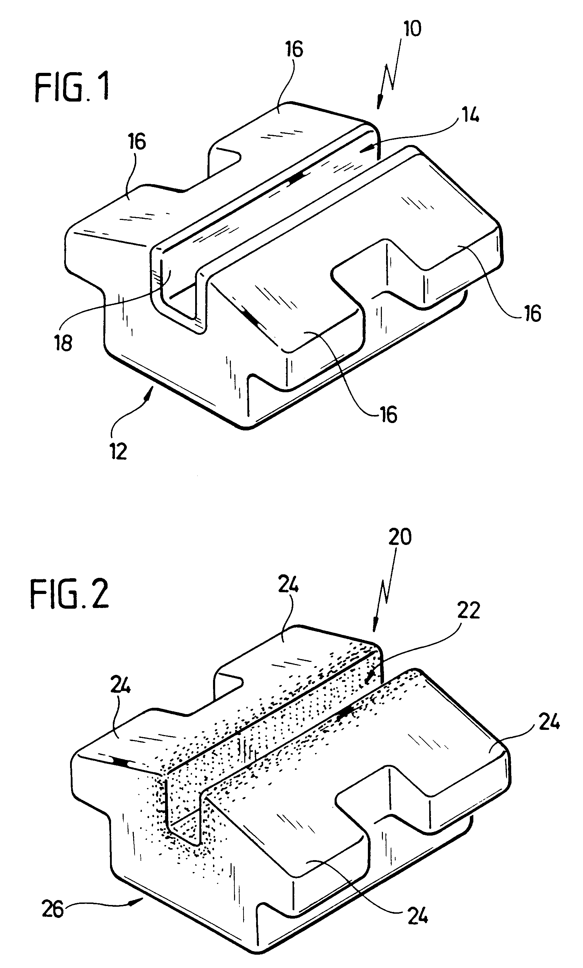

Fig. 1 zeigt ein im Gesamten mit dem Bezugszeichen 10 gekennzeichnetes orthodontisches Hilfsteil in Form eines Brackets, wie es üblicherweise bei der Durchführung von Zahnstellungskorrekturen in der Orthodontie verwendet wird.

Das Bracket weist eine Unterseite oder Basis 12 auf, mit der es auf eine Zahnoberfläche aufgeklebt werden kann.

In Längsrichtung und an der Oberseite ist ein im wesentlichen im Querschnitt rechteckiger Schlitz 14 vorgesehen, in den ein Bogendraht eingesetzt wird, der die Korrekturkräfte für die Veränderung der Zahnstellung auf das Bracket aufbringt.

Weiter sind beidseits des Schlitzes 14 sogenannte Bindungsflügel 16 vorhanden, die ein Widerlager für Befestigungsmittel für den Bogendraht bilden. Der Bogendraht kann mit den Befestigungsmitteln sicher in dem Schlitz 14 festgehalten werden, wodurch über die Behandlungszeit sichergestellt ist, daß die Korrekturkräfte stets in der vom behandelnden Arzt gewünschten Weise auf den Zahn wirken.

Die erfindungsgemäße Besonderheit des in Fig. 1 dargestellten Brackets 10 liegt in der Verstärkung des Brackets im Bereich des Schlitzes 14, wobei in dem in Fig. 1 gezeigten Ausführungsbeispiel ein Verstärkungsteil 18 eingesetzt ist, welcher sich über die gesamte Länge des Schlitzes 14 erstreckt. Alternativ kann vorgesehen sein, daß das Verstärkungsteil 18 etwas kürzer als der Schlitz 14 ausgebildet ist und an seinen Stirnseiten von dem Kunststoffmaterial des restlichen Bracketkörpers bedeckt wird. Das Verstärkungsteil 18 besteht in diesem Fall aus gesintertem, polykristallinem Aluminiumoxid und weist zu dem umgebenden Kunststoffmaterial des Brackets 10 sehr ähnliche Farb- und Transluzenzwerte auf.

Das Bracket unterscheidet sich in seinem Aussehen auf dem Zahn aufgebracht nur unwesentlich von den reinen Kunststoffbrackets, d.h. es bleibt beim Tragen durch den Patienten im wesentlichen unsichtbar. Trotzdem wird mit dem erfindungsgemäßen Bracket eine wesentlich verbesserte Genauigkeit in der erzielten Zahnkorrektur erhalten, da über den Einsatz des Verstärkungsteils 18 in dem Bracket 10 die Korrekturkräfte über wesentlich größere Flächen auf den Bracketkörper übertragen werden, ohne daß dabei eine Deformierung des Schlitzes 14 erfolgen kann.

Bei der in Figur 1 gezeigten Ausführungsform reichen die Seitenwandungen des Verstärkungsteils 18 bis zur Oberseite des Brackets 10. Alternativ hierzu wäre auch eine etwas niedrigere Ausbildung der Seitenwandungen möglich, wobei diese dann im Bereich der Oberseite des Brackets von dem Kunststoffmaterial des Bracketgrundkörpers bedeckt sind. Wichtig für das Verstärkungsteil 18 im Hinblick auf eine Minimierung der Friktion zwischen Bogendraht und Bracket im Bereich des Schlitzes 14 ist, daß die Oberflächenbereiche des Schlitzes 14 von dem Verstärkungsteil 18 gebildet werden, die mit dem Bogendraht in Berührung kommen und über die die Zahnkorrekturkräfte vom Bogendraht auf das Bracket geleitet werden.

In Fig. 2 ist eine alternative Ausführungsform der Erfindung ebenfalls anhand eines Brackets 20 gezeigt, wobei, wie bei dem in Fig. 1 beschriebenen Bracket ein Schlitz 22 für die Aufnahme eines nicht gezeigten Bogendrahtes vorhanden ist, ebenso wie sogenannte Bindungsflügel 24, die der Fixierung des Bogendrahtes im Schlitz 22 dienen. Das Bracket wird ebenso wie das Bracket aus Fig. 1 mit seiner Unterseite oder Basis 26 auf der Zahnoberfläche der Zähne des zu behandelnden Patienten aufgeklebt.

Im Gegensatz zu der Ausführungsform gemäß Fig. 1 wird jedoch der Schlitz 22 nicht durch ein gesondertes Verstärkungsteil ausgekleidet, sondern das Kunststoffmaterial des Brackets 20 ist durch das bereichsweise Einbringen von anorganischem, oxidischem Material, insbesondere Aluminiumoxid in seiner Trihydratform, mechanisch so weit verstärkt, daß es in Bezug auf die Übertragung von Korrekturkräften vom Bogendraht auf den Bracketkörper insgesamt gleich wirkend ist mit dem Einsatz 18 in Fig. 1. Gleichzeitig wird eine annähernd gleich niedrige Friktion mit dem metallischen Bogendraht erreicht.

Selbstverständlich lassen sich die oben beschriebenen erfindungsgemäßen Brackets auch auf Bändern aufkleben und nicht nur direkt auf die Zahnoberfläche. Die beschriebenen Vorteile der erfindungsgemäßen Brackets bleiben dabei selbstverständlich erhalten.

## Patentansprüche

1. Auf Kunststoffbasis hergestelltes orthodontisches Hilfsteil, insbesondere Bracket oder Bukkalröhrchen, mit einer zumindest in mit Zahnkorrekturkräften beaufschlagten Teilbereichen angeordneten, die mechanische Festigkeit erhöhenden Verstärkung, dadurch gekennzeichnet, daß die Verstärkung unter Verwendung eines keramischen Materials hergestellt ist.

2. Orthodontisches Hilfsteil nach Anspruch 1, dadurch gekennzeichnet, daß das keramische Material ein oxidkeramisches Material ist.

3. Orthodontisches Hilfsteil nach Anspruch 2, dadurch gekennzeichnet, daß die Verstärkung ein Keramikteil, insbesondere aus gesintertem polykristallinem Aluminiumoxid umfaßt.

4. Orthodontisches Hilfsteil nach Anspruch 3, dadurch gekennzeichnet, daß das Keramikteil im Preßsitz in dem Hilfsteil gehalten ist.

5. Orthodontisches Hilfsteil nach Anspruch 3, dadurch gekennzeichnet, daß das Keramikteil mit Kunststoff umspritzt ist.

6. Orthodontisches Hilfsteil nach Anspruch 1 oder 2, dadurch gekennzeichnet, daß die Verstärkung ein mit partikelförmigem keramischem Material hochgefülltes Polymerteil ist.

7. Orthodontisches Hilfsteil nach Anspruch 6, dadurch gekennzeichnet, daß das Hilfsteil und die Verstärkung einstückig ausgebildet sind.

8. Orthodontisches Hilfsteil nach einem der Ansprüche 1 bis 7, dadurch gekennzeichnet, daß die Verstärkung so ausgebildet und angeordnet ist, daß sie im wesentlichen die Oberflächenbereiche des Hilfsteils bildet, über welche die Korrekturkräfte auf das Hilfsteil übertragen werden.

9. Orthodontisches Hilfsteil nach einem der Ansprüche 1 bis 8, dadurch gekennzeichnet, daß die Verstärkung aus einem transluzenten Material hergestellt ist.

10. Orthodontisches Hilfsteil nach einem der Ansprüche 1 bis 9, dadurch gekennzeichnet, daß der Kunststoff einen Polycarbonat-, Polyethylen-, Polyester- oder Polyacrylharzanteil oder davon abgeleitete Copolymeran- teile umfaßt.

11. Orthodontisches Hilfsteil nach einem der Ansprüche 1 bis 10, dadurch gekennzeichnet, daß das partikelförmige keramische Material Zirkondioxid, Siliziumdioxid, insbesondere als Quarz- oder Cristobalitmehl, oder Aluminiumoxid, insbesondere in Form des Trihydrats, umfaßt.

12. Orthodontisches Hilfsteil nach Anspruch 11, dadurch gekennzeichnet, daß die mittlere Partikelgröße des keramischen Materials ca. 5 µm bis 100 µm beträgt.

13. Orthodontisches Hilfsteil nach einem der Ansprüche 1 bis 12, dadurch gekennzeichnet, daß das Hilfsteil ein Bracket mit einer Basis zur direkten Verklebung des Hilfsteils mit einer Zahnoberfläche ist und daß die Verstärkung so ausgebildet ist, daß die mechanische Festigkeit der Basis im wesentlichen unbeeinflußt ist.

14. Orthodontisches Hilfsteil nach Anspruch 13, dadurch gekennzeichnet, daß die Verstärkung lediglich im Bereich des für die Aufnahme eines Bogendrahtes vorgesehenen Schlitzes vorhanden ist.

15. Orthodontisches Hilfsteil in Form eines Brackets, hergestellt aus einem mit partikelförmigem keramischem Material hochgefüllten Kunststoff.

## Claims

1. An orthodontic aid, in particular a bracket or buccal tube, produced on a plastics basis, comprising a reinforcement increasing the mechanical strength and being arranged at least in areas acted upon by tooth correcting forces, characterized in that the reinforcement is produced with the use of a ceramic material.

2. Orthodontic aid as defined in claim 1, characterized in that the ceramic material is an oxide ceramic material.

3. Orthodontic aid as defined in claim 2, characterized in that the reinforcement comprises a ceramic part, in particular made of sintered polycrystalline alumina.

4. Orthodontic aid as defined in claim 3, characterized in that the ceramic part is held in a force fit in the aid.

5. Orthodontic aid, as defined in claim 3, characterized in that the ceramic part is spray-coated with plastic.

6. Orthodontic aid as defined in claim 1 or 2, characterized in that the reinforcement is a polymer part filled to a considerable extent with particulate ceramic material.

7. Orthodontic aid as defined in claim 6, characterized in that the aid and the reinforcement are designed in one piece.

8. Orthodontic aid as defined in any of claims 1 to 7, characterized in that the reinforcement is designed and arranged such that it essentially forms the surface regions of the aid, via which the correction forces are transferred to the aid.

9. Orthodontic aid as defined in any of claims 1 to 8, characterized in that the reinforcement is produced from a translucent material.

10. Orthodontic aid as defined in any of claims 1 to 9, characterized in that the plastic comprises a polycarbonate, polyethylene, polyester or polyacrylic resin portion or copolymer portions derived therefrom.

11. Orthodontic aid as defined in any of claims 1 to 10, characterized in that the particulate ceramic material comprises zirconia, silicon dioxide, in particular as powdered quartz or cristobalite, or alumina, in particular in the form of the trihydrate.

12. Orthodontic aid as defined in claim 11, characterized in that the average particle size of the ceramic material is approximately 5 µm to 100 µm.

13. Orthodontic aid as defined in any of claims 1 to 12, characterized in that the aid is a bracket comprising a base for direct bonding of the aid to a tooth surface and that the reinforcement is designed such that the mechanical strength of the base is essentially not influenced.

14. Orthodontic aid as defined in claim 13, characterized in that the reinforcement is present only in the region of the slot provided for accommodating an arch wire.

15. Orthodontic aid in the form of a bracket, produced from a plastic filled to a considerable extent with particulate ceramic material.

## Revendications

1. Elément auxiliaire orthodontique fabriqué à base de résine synthétique, notamment support ou petit tube buccal, comprenant un renforcement accroissant la résistance mécanique, disposé au moins dans des régions partielles sollicitées par des forces de correction de la denture, caractérisé en ce que le renforcement est fabriqué avec utilisation d'une matière céramique.

2. Elément auxiliaire orthodontique selon la revendication 1, caractérisé en ce que la matière céramique est une matière céramique oxyde.

3. Elément auxiliaire orthodontique selon la revendication 2, caractérisé en ce que le renforcement comprend un élément céramique, notamment fabriqué en oxyde d'aluminium polycristallin fritté.

4. Elément auxiliaire orthodontique selon la revendication 3, caractérisé en ce que l'élément céramique est maintenu dans l'élément auxiliaire par ajustement à serrage.

5. Elément auxiliaire orthodontique selon la revendication 3, caractérisé en ce que l'élément en céramique est surmoulé avec la résine synthétique.

6. Elément auxiliaire orthodontique selon la revendication 1 ou 2, caractérisé en ce que le renforcement est un élément en polymère fortement chargé d'une matière céramique en particules.

7. Elément auxiliaire orthodontique selon la revendication 6, caractérisé en ce que l'élément auxiliaire et le renforcement sont réalisés en une seule pièce.

8. Elément auxiliaire orthodontique selon une des revendications 1 à 7, caractérisé en ce que le renforcement est configuré et agencé de manière à former sensiblement les régions superficielles de l'élément auxiliaire par l'intermédiaire desquelles les forces correctrices sont transmises à l'élément auxiliaire.

9. Elément auxiliaire orthodontique selon une des revendications 1 à 8, caractérisé en ce que le renforcement est fabriqué en une matière translucide.

10. Elément auxiliaire orthodontique selon une des revendications 1 à 9, caractérisé en ce que la résine synthétique comprend une fraction composée de polycarbonate, de polyéthylène, de polyester ou de résine polyacrylique, ou des fractions composées de copolymères dérivés de ces substances.

11. Elément auxiliaire orthodontique selon une des revendications 1 à 10, caractérisé en ce que la matière céramique en particules comprend du dioxyde de zirconium, du dioxyde de silicium, notamment sous la forme d'une poudre de quartz ou de cristobalite ou de l'oxyde d'aluminium, notamment sous la forme de son trihydrate.

12. Elément auxiliaire orthodontique selon la revendication 11, caractérisé en ce que la dimension moyenne des particules de la matière céramique est d'environ 5 µm à 100 µm.

13. Elément auxiliaire orthodontique selon une des revendications 1 à 12, caractérisé en ce que l'élément auxiliaire est un support présentant une base servant au collage direct de l'élément auxiliaire sur la surface d'une dent et en ce que le renforcement est configuré de manière que la résistance mécanique de la base reste pratiquement inaltérée.

14. Elément auxiliaire orthodontique selon la revendication 13, caractérisé en ce que le renforcement est présent exclusivement dans la région de la fente prévue pour recevoir un fil d'arc.

15. Elément auxiliaire orthodontique formé d'un support, fabriqué en une résine synthétique fortement chargée d'une matière céramique en particules.
